# EUROPEAN PATENT SPECIFICATION

(11) **EP 2 915 789 B1**
(45) Date of publication and mention of the grant of the patent: **02.08.2017**
(21) Application number: 14425022.2
(22) Date of filing: 06.03.2014
(51) Int. Cl.: C04B 28/02, C04B 40/00, C04B 111/52

(54) **Construction element for acoustical and thermal insulation**
Bauelement zur akustischen und thermischen Isolation
Elément de construction pour isolation acoustique et thermique

(43) Date of publication of application: 09.09.2015
(73) Proprietor: PERLITE ITALIANA S.r.l., 20094 Corsico (MI) (IT)
(72) Inventor: Giulini, Iacopo Carlo Vittorio, I-20094 Corsico MI (IT)
(74) Representative: Asensio, Raffaella Consuelo

(56) References cited:
- EP-A1- 0 310 138
- EP-A1- 1 413 688
- DE-A1- 2 832 787
- DE-A1- 3 304 033
- DE-U- 1 852 216

## Description

The present invention relates to a construction element including perlite, to a process for its production and its use in the construction field.

One of the major construction problems is the building of walls that are capable of limiting the transmission of noise, of insulating acoustically a building from sounds coming from the outside, especially in urban environments, and/or of preventing the undesired propagation of sounds between the spaces of a building.

Another significant problem in the construction field is to insulate thermally a building from the outside and to prevent the undesired transmission of heat between the rooms. The thermal insulation of buildings has obvious economic and ecological benefits, also regarding the reduction of emissions.

In general, the traditional hollow bricks, although very cheap, do not allow optimum thermal insulation, since the block geometry and the mixture conductivity confer reduced insulating properties.

Some hollow or block-shaped bricks, for example, are substantially made of an outer foam-type material structure and are provided with one or more cavities that may contain a filling material (e.g. US 3,905,170 and EP2172435). DE3304033 discloses a lightweight construction element suitable for sound insulation made from a hardened mixture of 30 - 70 wt% expanded perlite granules of size 0 - 6 mm, 20 - 35 wt % MgO, 20 - 35 wt% MgCl2 x 5 H2O and 0,01 - 1 wt% pore forming agent. The density of the lightweight material is 100 - 220 kg/m3. In DE3304033, four embodiments are given for different mixtures. DE2832787 likewise refers to the manufacture of sound insulating construction elements made from a carefully optimized lightweight mixture containing expanded perlite. Disclosed therein is a process for the production of acoustically insulating panels. A sequential mixture of 1. expanded perlite granules of size 0,1 - 7 mm (1 dm3), 2. cement (100 - 140 g), 3. caoutchouc latex (solid content 5 - 20 g) and 4. water (in necessary quantity) is filled into a metallic mould, vibrated, compressed, unmoulded and hardened in ambient moist air or in steam atmosphere (3h, 90°C).

However, the production of building elements filled with insulating and/or sound-absorbing materials often requires a complicated production process, with relatively high costs and considerable environmental impact.

In addition, commonly used building block systems fail to combine the acoustic and thermal insulation and may cause the so-called "thermal and acoustic bridges" between the interior and the exterior of a building, which can nullify even the most sophisticated insulation system.

Moreover, building materials normally used cannot be regenerated and recycled, maintaining characteristics similar to those of the original material and they must be disposed of through appropriate procedures. This results in a high environmental impact, since the material must be transferred to the landfill or recycled after plastic or dangerous materials have been separated.

These materials are mainly used as inert, i.e. low value, materials that, for example, once ground and screened can be used in road embankments or in the production of new products.

One aim of this invention is to provide a construction element with excellent acoustic and thermal insulation performance, lightweight, adequate mechanical strength to be used in the construction industry, fire resistant and high chemical and physical stability.

Within this context, a scope of this invention is to provide an efficient and economical method for the production of a construction element with these characteristics.

Another purpose of this invention is to prepare a material that can be easily recycled or transformed with low environmental impact.

In accordance with this invention, these purposes, and others that will become apparent hereinafter, are achieved through a building element production process including the following steps:
i. loading in a silo a mixture consisting of expanded perlite granules with particle sizes from 0.01 to 6 mm;
ii. transferring the mixture of step i. from the silo to a mixer using volumetric dosing to add from 0.5 to 1 cubic meter of the mixture in step i. per cubic meter of the final mixture;
iii. adding to the mixture of expanded perlite particles in the mixer in step ii a quantity of water from 40% to 90% in weight with respect to the binder weight;
iv. adding to the mixture of perlite and water obtained in step iii. an amount of binder from 120 to 300 kg per cubic meter of the final mixture;
v. adding to the mixture obtained in step iv one or more additives in amounts from 0.01% to 2% in weight of the additive / weight of the binder;
vi. transferring the mixture obtained in step v. into block moulds for the production of construction elements by vibro-compression;
vii. vibro-compressing the mixture in block moulds of step vi.;
viii. storing the vibro-compressed wet mixture in the block moulds of step vii. for a resting period of 24 hours to 4 days at 4 to 40°C.

These scopes have also been achieved through a construction element including the vibro-compressed and dried mixture produced through this process.

The invention scopes were also achieved through the use of such element as a construction material in the building industry.

Within the context of this invention, the term expanded perlite granules means a material obtained in granular form after expansion at high temperatures (typically 650-1100°C) of a particular volcanic effusive silicate rock called perlite, having a colour variable from gray to pink, whose chemical composition is similar to that of rhyolites and dacites.

Unlike other glassy rocks, perlite has the ability to expand its volume up to 20 times compared to the original volume, when it is heated to high temperatures, close to its softening point. The expansion is related to the presence of water stored in the closed porosity of the rock, due to the sudden cooling phase after the spillage of magma during the rock formation.

When subjected to temperatures between 650 and 1100°C, the rock expands due to the vaporization of water. In this irreversible process, some bubbles are generated inside the granules, which confer to the expanded perlite exceptional lightness, as well as excellent physical properties, in particular thermal insulation, and the typical white colour. The entire expanded perlite production process, from the rock crushing and grinding to heating, and the implementation phases are characterized by the absence of emissions of VOC (Volatile Organic Compounds), of fibres, of radon gas, of toxic gases or of dangerous particles.

The granules structure, visible e.g. through images taken with a scanning electron microscope (SEM), is characterized by the presence of open porosities (canaliculi forming a dense network) and closed porosities (isolated cells and cavities). The simultaneous presence of these features confers high breathable power to the rock (due to the open porosity) and, at the same time, high impermeability to water in the core of the granule (due to closed porosities).

The expanded perlite, which can be classified in terms of physical-chemical characteristics as silica glass, is a stable and chemically inert product, which does not contain asbestos or free crystalline silica (<1%), and has a negligible content of natural radioactivity, which is consistent with the criteria of sustainability and of green architecture (ANAB-ICEA certification).

The granules of perlite and/or the bulk perlite in the context of this invention can be completely or partially coated with substances that improve its water repellency. Examples of these substances are polymers and silicone-based emulsions such as siloxanes, silicones, silicates or magnesium oxides.

Within the context of this invention, a binder is a substance, which, mixed with water, yields a plastic mass, which is subject to a progressive stiffening process to achieve high mechanical resistance. Examples of binders that can be used within this invention are hydraulic binders such as hydraulic lime and cement (prevailing) besides magnesia binding aluminous cements.

Within this invention different types of mixers can be used to obtain building mixtures, such as a planetary mixer (preferably), a vertical or horizontal mixer silo. The silos can be loaded from bags or standard "big bag" containers (Flexible Intermediate Bulk Container).

Within the context of this invention, an element or composition "including" a certain substance is made up of such substance or includes such substance in addition to other.

The term "additive" within the context of this invention refers to at least one fluidizing, wetting, anti-withdrawal aerating or antifreeze substance or their mixture.

The dimensions of particles regarding this invention are from 0.001 to 6 mm, preferably from 0.01 mm to 1.3 mm, or from 0.01 mm to 2 mm. The particle size measures are determined through sieving according to methods known by the person skilled in the art.

Preferably, the minimum size of perlite particles in the process according to this invention is 0.05, 0.1, 0.15, 0.2, 0.5, or 1 mm.

Preferably, the maximum size of perlite particles in the process according to these invention is 6 mm, 5.5 mm, 5 mm, 4.5 mm, 4 mm, 3.5 mm, 3 mm, 2.5 mm, 2 mm, 1.5 mm, 1.3 mm or 1 mm.

Preferably, the measurement of average particle sizes is carried out using known methods, for example by manual or automated sieving.

In one aspect, this invention regards a construction element production process including the following steps:
i. loading in a silo a mixture consisting of expanded perlite granules with particle sizes from 0.01 to 6 mm;
ii. transferring the mixture of step i. from the silo to a mixer using volumetric dosing to add from 0.5 to 1 cubic meter of the mixture in step i. per cubic meter of the final mixture;
iii. adding to the mixture of expanded perlite particles in the mixer in step ii a quantity of water from 40% to 90% in weight with respect to the binder weight;
iv. adding to the mixture of perlite and water obtained in step iii. an amount of binder from 120 to 300 kg per cubic meter of the final mixture;
v. adding to the mixture obtained in step iv one or more additives in amounts from 0.01% to 2% in weight of the additive / weight of the binder;
vi. transferring the mixture obtained in step v. into block moulds for the production of construction elements by vibro-compression;
vii. vibro-compressing the mixture in block moulds of step vi.;
viii. storing the vibro-compressed wet mixture in the block moulds of step vii. for a resting period of 24 hours to 4 days at 4 to 40°C.

The term "resting period" refers to the permanence of the block in a cell, after being extracted from the mould (preferably if at a controlled temperature and without undergoing mechanical stress), until spontaneous solidification of the mixture. The resting can be carried out in cells or in specific rooms.

The blocks including perlite of the prior art are produced from expanded perlite granules having a size above 6 mm. It was common opinion so far, in fact, that the perlite granules with lower than the above-indicated size were unsuitable for the preparation of construction blocks, because, during processing and pressing phases, they would give rise to very fine particles, which would have caused instability and fragility of the final block, in addition to an extreme difficulty to manifacture the blocks without producing large amounts of working residues.

The inventors of this process, however, have surprisingly found that the perlite with a particle size of 0.001 to 6 mm, subjected to pressing, provides a durable and lightweight material, having volume lower than that of the initial granules, but easily workable. The material thus obtained, once mixed with appropriate amounts of water and binder, yields a light and stable construction block with high contents of perlite and low amounts of binder.

The mixture of perlite granules used in step i. of the process according to this invention is preferably obtained by pressing the granules of perlite having a minimum size equal to or smaller than 6 mm. The pressing may be done applying a force that can be determined with routine techniques by qualified personnel according to the characteristics of the system to be used.

Preferably, the particle size of the perlite used in step i. of the procedure according to the present invention is from 0.001 to 2 mm, more preferably from 0.001 to 1.3 mm. The use of lower amounts of binder with respect to the blocks of the prior art is particularly advantageous because it allows reducing the production costs and provides a more easily disposable or recyclable material, for example as an inert material for buildings, without the need for special treatments.

Moreover, the reduction of the amount of binder (typically, but not exclusively, cement) is particularly advantageous from the environmental point of view.

In fact, generally, an amount ranging from 0.7 to 1 cubic meter of concrete is obtained from one cubic meter of material extracted from a quarry, to be used in the construction field. On the other hand, an amount ranging from 10 to 20 cubic meters of expanded perlite are obtained from a cubic meter of material extracted in the quarry, with a consequent reduction of the environmental impact of the extraction process and of the transportation from the quarry to the processing site, in addition to obvious economic benefits.

In addition, through the process according to this invention, by adding appropriate inert materials to the mixture before the addition of water and binder, it is possible to obtain a variety of construction blocks, with variable weight and density, which can be used as supporting elements or firewall or thermal and / or acoustic insulators.

The method according to this invention is a rapid and economical process for the production of a building block that also has low environmental impact, since no organic solvents or glues (necessary, for example, for the production of "sandwich" materials) are used and heat treatments are minimized.

The construction elements of the prior art are generally obtained by extrusion followed by heating, which require complex and expensive machinery and a considerable amount of energy.

The process according to this invention allows quick, efficient and economical production of construction elements with high insulating performance and high fire resistance through vibro-compression.

Advantageously, the construction element made according to this invention meets the regulatory parameters regarding acoustic and thermal insulation; it is lighter than the average of the elements of the prior art. In fact, the building element according to the present invention has a density between 300 and 1400 kg/m³, while the elements of the prior art do not reach the density and the low overall heat transfer coefficient (U) of the wall that can be obtained with the block of the present invention. Preferably, the net dry density of the building element prepared according to the process of the present invention is from 300 to 900 kg/m³. A block with these characteristics is lightweight and insulating, and can be used as thermal and/or firewall block.

Preferably, the building element prepared according to the process of this invention has a net dry density between 1100 and 1800 kg/m³.

A block with these characteristics is lightweight and insulating and can be used as supporting block and/or acoustic block.

Preferably, the additives admixed in step vi. of the process according to this invention are one or more among a fluidizer, a wetting agent, an aerating agent, an anti-shrink agent, a colorant, an antifreeze, or their mixture. In an embodiment, the granules of expanded perlite according to this invention are treated with a hydrophobic substance. It is found that the treatment of granules of expanded perlite of the construction element according to this invention with a hydrophobic substance improves the wet mixture performance, reducing the water-binding agent ratio with positive effects in terms of lightness and heat insulation. Preferably, in the process according to this invention the binder is selected from cement, magnesia, a silicate, alumina cement, lime, an unmodified starch, a modified starch, and their mixture. It has been found, in fact, that thanks to the use of such substances, the element according to this invention has advantageous features such as relatively low density and thermal insulation.

Preferably, in the process according to this invention the binder is 42.5, 32.5 or 52.5 cement, where the number identifies the minimum threshold of compressive strength, in N/mm², measured according to standards EN 197-1. More preferably, in the process according to this invention the binder is cement 42.5.

Through the process of this invention, a wide range of construction blocks can be obtained, that can be used in the construction field.

For this purpose, one or more additional materials such as aggregates, perlite of different sizes, pumice, lava, clay, sand, gravel, perlite granules with sizes lower than 6 mm can be added to the mixture during the process. Preferably, perlite with granule size up to 6 mm, sand, gravel, or mixture thereof are added to the mixture as additional materials during the process.

More preferably, in the process according to this invention the gravel is added to the mixture of perlite particles in the mixer of step iii. before the addition of water of step iv. The amount of gravel that may be added varies depending on the net volumetric mass of the element that you want to obtain, based on routine considerations made by qualified personnel.

More preferably, in the process according to this invention, sand is added to the mixture of perlite particles in the mixer of step iii. before the addition of water of step iv.

The amount of sand that can be added varies depending on the net volumetric mass of the element to be obtained, based on routine considerations made by qualified personnel.

Preferably, the amount of sand and/or gravel ranges from 0 to 6% weight/total weight of the element, more preferably from 0 to 6% weight/total weight of the element. Preferably, in the process according to this invention, an amount comprised between 0.5 and 1 volume/total volume of the mixture of perlite granules with dimensions from 0.001 mm to 1.3 mm or 0.001 mm and 2 mm is added to the mixture of perlite particles in the mixer of step iii. before the addition of water in step iv.

In one aspect, the present invention regards a construction element comprising the vibro-compressed mixture produced through the above-described process.

The outer walls of the element according to this invention can be smooth or, preferably, with grooves, bumps or channels that facilitate interlocking of the adjacent elements during their installation.

Preferably, the construction element according to this invention has a ratio between void volume and solid volume of 0.1 to 0.9, even better if between 0.15 and 0.55. Preferably, the construction element according to this invention has a density for thermal and firewall use between 300 and 900 kg/m³.

Preferably, the construction element according to this invention has a density from 300 to 900 kg/m³ and a ratio between empty volume and filled volume from 0.1 to 0.9 (element for thermal and firewall use).

Preferably, the construction element according to this invention has parallelepiped shape with at least one rectified outer face.

Preferably, the construction element according to this invention comprises at least one cavity or hole and its ratio between void volume (of the cavity / drilling) and full volume ranges from 0.1 to 0.7, even better if included between 0.13 and 0.65, still better from 0.15 to 0.55.

The construction element according to this invention may have variable dimensions according to the construction requirements and to the uses to which it may be intended. As non-limiting example, its length may be comprised between 20 and 100 cm, its width between 8 and 60 cm and/or its height between 15 and 40 cm.

Preferably, the construction element according to this invention has a coefficient of thermal transmittance (U) ranging from 0.08 to 0.5 W/m²K, or between 0.6 and 1.8 W/m² K and/or a power index of the sound insulation with a noise reduction between 30 and 60 db. More preferably, the construction element according to this invention has a fire resistance between 60 min and 360 min.

The rectification step of at least one face is very important to reduce the possibility that the blocks according to this invention contribute to the formation in the buildings of the so-called "thermal bridges", that is, preferential heat paths between inside and outside of buildings, or between non-communicating parts of the structures, which can compromise the thermal insulation.

In another aspect, the present invention provides the use of the element as described above as a construction material in the construction industry.

## Claims

1. A process for the production of a construction element comprising the following steps:
i. loading in a silo a mixture consisting of expanded perlite granules with particle sizes from 0.01 to 6 mm;
ii. transferring the mixture of step i. from the silo to a mixer using volumetric dosing to add from 0.5 to 1 cubic meter of the mixture in step i. per cubic meter of the final mixture;
iii. adding to the mixture of expanded perlite particles in the mixer in step ii a quantity of water from 40% to 90% in weight with respect to the binder weight;
iv. adding to the mixture of perlite and water obtained in step iii. an amount of binder from 120 to 300 kg per cubic meter of the final mixture;
v. adding to the mixture obtained in step iv one or more additives in amounts from 0.01% to 2% in weight of the additive / weight of the binder;
vi. transferring the mixture obtained in step v. into block moulds for the production of construction elements by vibro-compression;
vii. vibro-compressing the mixture in block moulds of step vi.;
viii. storing the vibro-compressed wet mixture in the block moulds of step vii. for a resting period of 24 hours to 4 days at 4 to 40°C.

2. The process according to claim 1 where the binder is 42.5, 32.5 or 52.5 cement.

3. The process according to claim 1 or 2 wherein the size of the expanded perlite particles in the mixture obtained in step ii. is from 0.001 to 2 mm or from 0.001 and 1.3 mm.

4. The process according to one of the previous claims where one or more additives added in step vi. are at least one of a fluidizing agent, a wetting agent, an air entraining agent, a colorant, an antifreeze agent, a shrinkage reducing agent or their mixture.

5. The process according to one or more of the previous claims, where, before the addition of water in step iv., an amount between 0.5 and 1 cubic meter of mixture per cubic meter of final mixture of perlite granules with sizes between 0.001 and 1.3 mm and 0.001 mm are added to the mixture of perlite particles in the mixer of step ii.

6. A construction element comprising the vibro-compressed mixture produced by the process of the previous claims.

7. The construction element according to claim 6 having a parallelepiped shape wherein at least one outer face is rectified.

8. The construction element according to one of claims 6 - 7 including at least one cavity or drilled hole, and having a ratio volume of the cavity or hole/filled volume between 0.15 and 0.55.

9. Use of the element according to claims 6-8 as a building material in the construction industry.

## Patentansprüche

1. Ein Verfahren zur Herstellung von einem Bauelement, das die folgenden Schritte umfasst:
i. Beladung in einem Silo einer Mischung aus expandiertem Perlitgranulat mit Teilchengrößen von 0,01 bis 6 mm;
ii. Übertragung der Mischung aus Schritt i vom Silo zu einem Mischer unter Verwendung der volumetrischen Dosierung, um von 0,5 bis 1 Kubikmeter der Mischung in Schritt i pro Kubikmeter der Endmischung zuzusetzen;
iii. Zugabe zu der Mischung aus expandierten Perlitteilchen in dem Mischer in Schritt ii einer Wassermenge von 40% bis 90% im Gewicht bezogen auf das Bindemittelgewicht;
iv. Zugabe zu der in Schritt iii erhaltenen Mischung von Perlit und Wasser einer Bindemittelmenge von 120 bis 300 kg pro Kubikmeter der Endmischung;
v. Zugabe zu der in Schritt iv erhaltenen Mischung eines oder mehrerer Additive in Mengen von 0,01% bis 2% im Gewicht des Additivs / Gewicht des Bindemittels;
vi. Übertragung der in Schritt v erhaltenen Mischung in Blockformen zur Herstellung von Bauelementen durch Vibro-Kompression;
vii. Vibro-Kompression der Mischung in Blockformen von Schritt vi;
viii. Speicherung der vibro-komprimierten nassen Mischung in den Blockformen von Schritt vii für eine Ruhezeit von 24 Stunden bis 4 Tage bei 4-40°C.

2. Das Verfahren nach Anspruch 1, wobei das Bindemittel 42,5, 32,5 oder 52,5 Zement ist.

3. Das Verfahren nach Anspruch 1 oder 2, wobei die Größe der expandierten Perlitteilchen in der in Schritt ii erhaltenen Mischung 0,001-2 mm oder 0,001-1,3 mm beträgt.

4. Das Verfahren nach einem der vorhergehenden Ansprüche, wobei ein oder mehrere in Schritt vi zugegebene Additive mindestens ein Fluidisierungsmittel, ein Benetzungsmittel, ein Luftporenbildner, ein Farbmittel, ein Frostschutzmittel, ein Schrumpfungsreduktionsmittel oder deren Mischung sind.

5. Das Verfahren nach einem oder mehreren der vorhergehenden Ansprüche, wobei eine Menge zwischen 0,5 und 1 Kubikmeter der Mischung pro Kubikmeter der Endmischung von Perlitgranulaten mit Größen zwischen 0,001 und 1,3 mm und 0,001 mm vor der Wasserzugabe in Schritt iv der Mischung von Perlitteilchen in dem Mischer von Schritt ii zugesetzt wird.

6. Ein Bauelement, das die nach dem Verfahren der vorhergehenden Ansprüche hergestellte vibro-komprimierte Mischung umfasst.

7. Das Bauelement nach Anspruch 6 mit Parallelepiped-Form, wobei mindestens eine Außenfläche gleichgerichtet ist.

8. Das Bauelement nach einem der Ansprüche 6 bis 7 mit mindestens einem Hohlraum oder Bohrloch und mit einem Verhältnisvolumen zwischen dem Hohlraum oder Loch und dem Füllvolumen zwischen 0,15 und 0,55.

9. Verwendung des Elements nach den Ansprüchen 6-8 als Baustoff in der Bauindustrie.

## Revendications

1. Procédé de production d'un élément de construction comprenant les étapes suivantes :
i. charger dans un silo un mélange constitué de granules de perlite expansés avec des granulométries de 0,01 à 6 mm ;
ii. transférer le mélange de l'étape i du silo à un mélangeur en utilisant un dosage volumétrique pour ajouter de 0,5 à 1 mètre cube du mélange de l'étape i par mètre cube du mélange final ;
iii. ajouter au mélange de particules de perlite expansées dans le mélangeur de l'étape ii une quantité d'eau de 40% à 90% en poids par rapport au poids du liant ;
iv. ajouter au mélange de perlite et d'eau obtenu dans l'étape iii une quantité de liant de 120 à 300 kg par mètre cube du mélange final ;
v. ajouter au mélange obtenu dans l'étape iv un ou plusieurs additifs en des quantités de 0,01 % à 2% en poids de l'additif / poids du liant ;
vi. transférer le mélange obtenu dans l'étape v dans des moules à blocs pour la production d'éléments de construction par vibro-compression ;
vii. vibro-comprimer le mélange dans des moules à blocs de l'étape vi ;
viii. stocker le mélange mouillé vibro-comprimé dans les moules à blocs de l'étape vii pour une période de repos de 24 heures à 4 jours à 4-40°C.

2. Le procédé selon la revendication 1, dans lequel le liant est du ciment 42,5, 32,5 ou 52,5.

3. Le procédé selon la revendication 1 ou 2, dans lequel la taille des particules de perlite expansées dans le mélange obtenu dans l'étape ii est de 0,001 à 2 mm ou de 0,001 à 1,3 mm.

4. Le procédé selon l'une des revendications précédentes, dans lequel un ou plusieurs additifs ajoutés dans l'étape vi sont au moins l'un parmi un agent de fluidisation, un agent mouillant, un agent d'entraînement d'air, un colorant, un agent antigel, un agent réducteur de retrait ou leur mélange.

5. Le procédé selon l'une ou plusieurs des revendications précédentes, dans lequel, avant l'addition d'eau dans l'étape iv, une quantité comprise entre 0,5 et 1 mètre cube de mélange par mètre cube de mélange final de granules de perlite avec des tailles comprises entre 0,001 et 1,3 mm et 0,001 mm est ajoutée au mélange de particules de perlite dans le mélangeur de l'étape ii.

6. Elément de construction comprenant le mélange vibro-comprimé produit par le procédé selon les revendications précédentes.

7. L'élément de construction selon la revendication 6 ayant une forme parallélépipédique, dans lequel au moins une face externe est rectifiée.

8. L'élément de construction selon l'une des revendications 6 à 7, comprenant au moins une cavité ou un trou percé, et ayant un rapport entre le volume de la cavité ou trou et le volume rempli compris entre 0,15 et 0,55.

9. Utilisation de l'élément selon les revendications 6-8 comme matériau de construction dans l'industrie de la construction.
